# EUROPÄISCHE PATENTSCHRIFT

(11) **EP 3 517 680 B1**
(45) Veröffentlichungstag und Bekanntmachung des Hinweises auf die Patenterteilung: **22.07.2020**
(21) Anmeldenummer: 19152218.4
(22) Anmeldetag: 17.01.2019
(51) Int. Cl.: D06F 58/20, D06F 58/30

(54) **GERÄT ZUM TROCKNEN VON WÄSCHE UND VERFAHREN ZUM BETREIBEN EINER WÄRMEPUMPE EINES SOLCHEN GERÄTS**
DEVICE FOR DRYING OF LAUNDRY AND PROCEDURE FOR OPERATING A HEAT PUMP FOR SUCH A DEVICE
DISPOSITIF POUR SÉCHER DE LINGE ET PROCÉDÉ POUR L'OPÉRATION D'UNE POMPE À CHALEUR POUR UN TEL DISPOSITIF

(30) Priorität: 29.01.2018 DE 102018201257
(43) Veröffentlichungstag der Anmeldung: 31.07.2019
(73) Patentinhaber: BSH Hausgeräte GmbH, 81739 München (DE)
(72) Erfinder: Harbach, Alvaro, 10555 Berlin (DE); Müller, Markus, 01129 Dresden (DE); Stolze, Andreas, 14612 Falkensee (DE)

(56) Entgegenhaltungen:
- EP-A1- 2 690 212
- WO-A1-2011/080045
- WO-A1-2014/146704
- DE-A1- 4 409 607
- DE-A1-102008 031 495

## Beschreibung

Die Erfindung betrifft ein Gerät zum Trocknen von Wäsche, aufweisend wenigstens ein offenes Prozessluftsystem mit wenigstens einer zu trocknende Wäsche aufnehmenden Trockenkammer und wenigstens eine thermisch an das Prozessluftsystem gekoppelte Wärmepumpe. Des Weiteren betrifft die Erfindung ein Verfahren zum Betreiben einer Wärmepumpe eines Geräts zum Trocknen von Wäsche, das wenigstens ein offenes Prozessluftsystem mit wenigstens einer zu trocknende Wäsche aufnehmenden Trockenkammer aufweist, wobei die Wärmepumpe thermisch an das Prozessluftsystem gekoppelt ist.

Geräte zum Trocknen von Wäsche sind in vielfältigen Ausgestaltungen bekannt. Insbesondere sind Geräte zum Trocknen von Wäsche bekannt, die ein offenes Prozessluftsystem mit einer zu trocknende Wäsche aufnehmenden Trockenkammer und eine Rückgewinnung von Wärme aus der in dem Prozessluftsystem strömenden Prozessluft ermöglichen. Ein solches Gerät kann beispielsweise als Ablufttrockner mit Wärmerückgewinnung ausgebildet sein. Entsprechende Geräte sind beispielsweise aus DE 197 37 075 A1, DE 197 31 826 A1, DE 30 00 865 A1 und US 2012/10030960 A1 bekannt. Dabei kann das Aggregat zur Wärmerückgewinnung ein einzelner thermisch an das Prozessluftsystem gekoppelter Wärmetauscher oder eine thermisch an das Prozessluftsystem gekoppelte Kompressor-Wärmepumpe sein. In letzterem Fall wird der aus der Trockenkammer austretenden Abluft mittels eines Verdampfers der Wärmepumpe Wärme entzogen, die in einem Kältemitteikreislauf der Wärmepumpe mittels eines Verflüssigers der Wärmepumpe der in das Prozessluftsystem eingetretenen Prozessluft wieder zugeführt wird. EP 2 037 034 B1 offenbart zudem einen Ablufttrockner mit einer Wärmepumpe und einer Reinigungseinrichtung zum Reinigen des Verdampfers der Wärmepumpe.

WO 2005 / 032 322 A2 offenbart ein Gerät zum Trocknen von Wäsche mit einem offenen Prozessluftsystem und einer thermisch an das Prozessluftsystem gekoppelten Wärmepumpe. Eine zusätzliche Kühleinheit ist thermisch an eine Kältemittelleitung zwischen einem Verflüssiger und einer Expansionseinheit der Wärmepumpe gekoppelt und dient der Kühlung eines durch die Kältemittelleitung strömenden Kältemittels. Ein Zusatzgebläse kann die Kühleinheit mit einem Umgebungsluftstrom beaufschlagen.

DE 10 2008 031 495 A1 offenbart ein Gerät zum Trocknen von Wäsche, mit einem offenen Prozessluftsystem einer thermisch an das Prozessluftsystem gekoppelten Wärmepumpe ohne zusätzliche Kühlung des durch die Kältemittel strömenden Mediums außerhalb des Kondensators.

Bei der DE 44 09 607 A1 wird in einem geschlossenen Prozessluftkreis eine Kühlung des Kältemittels mittels eine Wärmetauschers vorgenommen, wobei mittels eines Ventilators Kühlluft zur Kühleinheit geführt wird.

Da ein Ablufttrockner ein offenes Prozessluftsystem aufweist, wird mit dem Ablufttrockner im Gegensatz zu einem Kondensationstrockner mit einer geschlossenem Prozessluftführung und Wärmerückgewinnung neben der latenten auch sensible Wärme zurückgewonnen. Zusätzlich erhöht auch die über den Verflüssiger der Wärmepumpe in die Prozessluft eingebrachte Kompressorleistung die Trockengeschwindigkeit. Dadurch kann ein Ablufttrockner mit Wärmerückgewinnung trotz eines Kondensationswirkungsgrades kleiner 50% geringere Verbrauchswerte haben als ein Kondensationstrockner.

In einem geschlossenen Prozessluftsystem führt die kontinuierlich eingebrachte Kompressorleistung zu einer zunehmenden Erwärmung des Kondensationstrockners. Steht dieser Leistungseintrag nicht im Gleichgewicht mit den während eines Trocknungsvorgangs gegebenen Energieverlusten, wie beispielsweise einer Bauteilerwärmung, Verlusten durch Wärmestrahlung, Konvektion oder Leckage, können das Prozessluftsystem und die Wärmepumpe überhitzen, wodurch die Effizienz der Wärmepumpe sinkt. Als Gegenmaßnahme hierzu sind Anwendungen mit aktiv gekühlten Zusatzwärmetauschern im Kältemittelkreislauf der Wärmepumpe oder mit Luft-Luft-Wärmetauschern in der Prozessluft bekannt.

Da in einem offenen Prozessluftsystem eines Ablufttrockners die Temperatur der angesaugten Prozessluft nahezu konstant bleibt und nicht höher als die Umgebungstemperatur ist, kommt es zu keiner entsprechenden Überhitzung. Das konstant niedrige Temperaturniveau der angesaugten Umgebungsluft bedingt hohe Wirkungsgrade der Wärmepumpe. Demgegenüber kann der Nachteil einer Gesamtenergiebilanz des Aufstellortes stehen, da die in der Regel wärmere Raumluft mehrmals durch kältere Außenluft ausgetauscht wird. DE 103 49 712 A1 offenbart einen Ablufttrockner mit einem regelbaren Umluftanteil. Bekannt ist zudem, dass Ablufttrockner mit einer Wärmepumpe und einer Zusatzheizung sehr hohe Entfeuchtungsleistungen realisieren können.

Der Kondensationswirkungsgrad von Ablufttrocknern mit einer Kompressor-Wärmepumpe zur Wärmerückgewinnung kann abhängig vom Pumpfaktor und der relativen Luftfeuchte der Eintrittsluft bis zu 70% betragen. Nur wenn die absoluten Wasserbeladungen der Prozessluft am Ein- und Austrittspunkt bei einer sonst verlustfreien Luftführung des Ablufttrockners gleich sind, kann dieser Wirkungsgrad unabhängig von dem Prozessluftvolumenstrom und der Trocknungsgeschwindigkeit 100% sein.

Da die aus dem Verdampfer der Wärmepumpe austretende Prozessluft den Ablufttrockner mit 100% relativer Feuchte verlässt, müsste bei einem angenommenen Prozessluftvolumenstrom von 200 m³/h die Prozessluft um 500 W abgekühlt werden. Beispielhaft für den angenommenen Prozessluftvolumenstrom in Höhe von 200 m³/h darf bei einer spezifischen Trocknungsgeschwindigkeit von 10 min/kg und einer Anfangsfeuchte der Wäsche von 60% die Differenz der Wasserbeladungen der Prozessluft zwischen Eintritt und Austritt des Prozessluftsystems für einen Kondensationsgrad von 80% 2,88 g/kg nicht überschreiten. Dieser Wert ist unabhängig von dem Zustand der Umgebungsluft.

Würde die Prozessluft mit gleicher Enthalpie wie am Eintritt des Prozessluftsystems aus diesem austreten, wäre die Wasserbeladung der Prozessluft noch in demjenigen Bereich, dass der Kondensationswirkungsgrad größer als 80% wäre. Hätte die Prozessluft am Eintritt des Prozessluftsystems bei 20°C eine relative Luftfeuchte von nur 50%, wäre der Kondensationswirkungsgrad nur noch etwa 80%. Bei einer Lufttemperatur von 20°C mit 100% relativer Feuchte am Austritt des Prozessluftsystems wäre der Kondensationswirkungsgrad etwa 60%. Für den angenommene Luftvolumenstrom von 200 m³/h entspricht dies einem Energieeintrag in die Prozessluft von 1000 W. Für eine mittlere elektrische Anschlussleistung des Trockners von 900 W (Kompressorleistung, Antriebsleistung und Steuerung) abzüglich thermischer Verluste von etwa 1/3, kann die Kondensationswirkung daher 70% nicht überschreiten.

Um einen Wärmepumpentrockner in einem geschlossenem Raum als Kondensationstrockner mit einem Kondensationswirkungsgrad größer 80% betreiben zu können, wären thermische Verluste des Systems im Bereich der gesamten Anschlussleistung erforderlich. Verluste in dieser Größenordnung verlängern die Trocknungszeit und erhöhen gleichzeitig den Energieverbrauch in ungewollter Höhe.

WO 2011/072999 A2 offenbart ein Haushaltsgerät mit einer Behandlungskammer zum Behandeln von Artikeln, einer Prozessluftführung zum Führen von Prozessluft durch die Behandlungskammer, wobei die Prozessluftführung ein Gebläse zum Antreiben der Prozessluft, eine stromaufwärts vor der Behandlungskammer angeordnete Heizvorrichtung zum Erwärmen der Prozessluft und eine Wärmepumpe umfasst, wobei es sich bei der Heizvorrichtung um eine Wärmequelle zum Übertragen von Wärme von einem durch die Wärmepumpe zirkulierenden Kältemittel auf die Prozessluft handelt. Die Wärmepumpe umfasst einen Kühlkörper zum Übertragen von Wärme in das Kältemittel, einen Kompressor zum Komprimieren des Kältemittels, ein Expansionssystem zum Expandieren des Kältemittels, wobei das Expansionssystem eine variable Verengung aufweist, die so definiert ist, dass sie eine Durchflussmenge eines Kondensats bei gegebenen Druck- und Temperaturbedingungen bestimmt, eine Kältemittelführung zum Zirkulieren des Kältemittels in einem geschlossenen Kreislauf durch die Wärmepumpe, eine mit dem Expansionssystem verbundene Steuereinheit und eine zu der Wärmepumpe gehörende Sensoreinheit zum Steuern der Verengung des Expansionssystems als Reaktion auf von der Sensoreinheit zur Steuereinheit übermittelte Signale. Die Sensoreinheit umfasst einen Umgebungstemperatursensor zum Erfassen einer Umgebungstemperatur des Geräts, wobei die Steuereinheit so voreingestellt ist, dass sie die Einschränkung auf einen Nennwert einstellt, wenn die Umgebungstemperatur im Wesentlichen einer gegebenen normalen Umgebungstemperatur entspricht, und die Steuereinheit so voreingestellt ist, dass sie die Einschränkung auf einen Wert einstellt, der den Nennwert übersteigt, wenn sich die Umgebungstemperatur wesentlich von der normalen Umgebungstemperatur unterscheidet.

Eine Aufgabe der Erfindung ist es, den Energieinhalt von Prozessluft an einem Austritt eines offenen Prozessluftsystems eines Geräts zum Trocknen von Wäsche zu verringern und die Entfeuchtungsleistung des Geräts zu erhöhen.

Diese Aufgabe wird durch die unabhängigen Patentansprüche gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Geräts können dabei Ausgestaltungen des Verfahrens entsprechen, und umgekehrt, selbst wenn im Folgenden hierauf im Einzelfall nicht explizit hingewiesen wird.

Ein erfindungsgemäßes Gerät zum Trocknen von Wäsche weist wenigstens ein offenes Prozessluftsystem mit wenigstens einer zu trocknende Wäsche aufnehmenden Trockenkammer, wenigstens eine thermisch an das Prozessluftsystem gekoppelte Wärmepumpe und wenigstens eine thermisch an eine Kältemittelleitung zwischen einem Verflüssiger und einer Expansionseinheit der Wärmepumpe gekoppelte Kühleinheit zum Kühlen eines durch die Kältemittelleitung strömenden Kältemittels auf.

Erfindungsgemäß wird das aus dem Verflüssiger ausströmende, verdichtete Kältemittel mittels der zusätzlichen Kühleinheit an der Kältemittelleitung des Kältemittelkreislaufs gekühlt. Hierzu kann die Kühleinheit wenigstens einen thermisch an die Kältemittelleitung gekoppelten, mit einem Kühlluftstrom beaufschlagbaren Luftkühler oder einen thermisch an die Kältemittelleitung gekoppelten, mit einem Kühlflüssigkeitsstrom beaufschlagbaren Flüssigkeitskühler aufweisen, also einen Wärmetauscher. Die Kältemittelleitung kann beispielsweise durch den Kühler hindurchgeführt sein.

Im Kältemittelkreislauf führt die zusätzliche Kühleinheit zu einer stärkeren bzw. sehr starken Unterkühlung des Kältemittels. Diese Unterkühlung kann abhängig von der über die Kühleinheit aus dem Kältemittelkreislauf ausgetragenen Leistung die Entfeuchtungsleistung über den Verdampfer der Wärmepumpe um bis zu einer 20% erhöhen. Damit wird der Energieinhalt bzw. die Wasserbeladung der gesättigten Prozessluft am Austritt des Verdampfers so weit gesenkt, dass gleichzeitig die Kondensationsrate um den gewünschten Betrag auf über 80% steigt. Aufgrund der konstanten Zustandsbedingungen der Prozessluft am Eintritt des Verflüssigers der Wärmepumpe und dessen unbeeinflussten Leistungseintrags in die Prozessluft bleibt die Trocknungsgeschwindigkeit nahezu unverändert. Da mit der erfindungsgemäßen Maßnahme der verstärkten Unterkühlung des Kältemittels auch eine Verbesserung des Wirkungsgrads der Wärmepumpe verbunden ist, ist sogar die Senkung des Energieverbrauchs des Geräts für die Trocknung von Wäsche möglich. Durch die erfindungsgemäße Zusatzkühlung des Kältemittels des Kältemittelkreislaufs der Wärmepumpe und den dadurch realisierbaren Kondensationswirkungsgrad von mehr als 80% kann das erfindungsgemäße Gerät trotz seines offenen Prozessluftkreislaufs als Kondensationstrockner in einem geschlossenem Raum betrieben werden.

Das offene Prozessluftsystem ist teilweise durch die zu trocknende Wäsche aufnehmende Trockenkammer gebildet und weist wenigstens ein Prozessluftgebläse zum Bewegen von Prozessluft durch kommunizierend mit der Trockenkammer verbundene Prozessluftführungen des Prozessluftsystems auf. Das Prozessluftsystem kann zudem wenigstens einen Prozessluftfilter aufweisen, der beispielsweise zwischen die Trockenkammer und den Verdampfer der Wärmepumpe geschaltet sein kann. Des Weiteren kann das Prozessluftsystem wenigstens eine elektrische Zusatzheizeinheit aufweisen, die zwischen den Verflüssiger der Wärmepumpe und der Trockenkammer geschaltet sein kann.

Die Wärmepumpe ist vorzugsweise unmittelbar thermisch an das Prozessluftsystem gekoppelt. Insbesondere sind der Verdampfer und der Verflüssiger thermisch an das Prozessluftsystem gekoppelt. Die Wärmepumpe kann als Kompressor-Wärmepumpe ausgebildet sein und entsprechend wenigstens einen Kompressor zum Verdichten des Kältemittels und eine Expansionseinheit zum Expandieren des Kältemittels aufweisen.

Das Gerät zum Trocknen von Wäsche kann beispielsweise als Wäschetrockner (Ablufttrockner), als Waschtrockner mit einer Ablufttrockenfunktion oder als Trockenschrank mit einer Ablufttrockenfunktion ausgebildet sein.

Gemäß einer nicht erfindungsgemäßen Ausgestaltung weist das Gerät wenigstens ein Zusatzgebläse auf, das derart angeordnet ist, dass mit ihm die Kühleinheit mit einem Umgebungsluftstrom beaufschlagbar ist. Durch die Beaufschlagung der Kühleinheit mit dem Umgebungsluftstrom kann der Kühleinheit und folglich dem Kältemittel Wärme entzogen werden, um die gewünschte Kühlung des Kältemittels durchführen zu können. Das Zusatzgebläse kann derart relativ zu der Kühleinheit angeordnet sein, dass der Umgebungsluftstrom direkt auf die Kühleinheit gerichtet ist. Alternativ kann das Zusatzgebläse über eine Luftführung mit der Kühleinheit verbunden sein.

Eine weitere nicht erfindungsgemäße vorteilhafte Ausgestaltung sieht vor, dass das Gerät wenigstens eine elektrisch mit dem Zusatzgebläse verbundene Ansteuerelektronik aufweist, die eingerichtet ist, das Zusatzgebläse in Abhängigkeit von wenigstens einem erfassten Prozessparameter eines Trocknungsvorgangs anzusteuern. Hierdurch ist eine gezielte Kühlung der Kühleinheit und folglich des Kältemittels in Abhängigkeit von einem, zwei oder mehreren Prozessparametern des Trocknungsvorgangs möglich. Als Prozessparameter kann beispielsweise eine Temperatur der Prozessluft an einem Eintritt oder eine Austritt des Prozessluftsystems oder dergleichen verwendet werden.

Erfindungsgemäß ist die Kühleinheit derart an dem Prozessluftsystem angeordnet, dass sie zumindest teilweise mit einer aus dem Verdampfer austretenden Prozessluft beaufschlagbar ist. Hierdurch ist kein Zusatzgebläse erforderlich, was mit Vorteilen bezüglich des verfügbaren Bauraums innerhalb des Geräts und mit einer Reduzierung von Herstellungskosten des Geräts verbunden ist. Die aus dem Verdampfer kommende gesättigte Prozessluft wird über die Kühleinheit geführt. Abhängig von dem jeweiligen Energieaustrag mittels der Kühleinheit aus dem Kältemittelkreislauf wird nicht nur die Temperatur der Prozessluft angehoben, sondern auch deren relative Feuchte gesenkt. Da die Temperatur der aus dem Prozessluftsystem austretenden Prozessluft durch die erfindungsgemäße Kühlmaßnahme dann deutlich über der Temperatur der in das Prozessluftsystem eintretenden Umgebungsluft liegt, ist niedergeschlagenes Kondensat, beispielsweise an mit der Prozessluft angeblasenen Wänden des Prozessluftsystems nicht mehr zu erwarten.

Nach einem erfindungsgemäßen Verfahren zum Betreiben einer Wärmepumpe eines Geräts zum Trocknen von Wäsche, das wenigstens ein offenes Prozessluftsystem mit wenigstens einer zu trocknende Wäsche aufnehmenden Trockenkammer aufweist, wobei die Wärmepumpe thermisch an das Prozessluftsystem gekoppelt ist, wird ein aus einem Verflüssiger der Wärmepumpe ausströmendes Kältemittel mittels wenigstens einer Kühleinheit, die thermisch an eine das aus dem Verflüssiger ausströmende Kältemittel führende Kältemittelleitung gekoppelt ist, aktiv gekühlt.

Mit dem Verfahren sind die oben mit Bezug auf das Gerät genannten Vorteile entsprechend verbunden. Insbesondere kann das Verfahren mit dem Gerät gemäß einer der oben genannten Ausgestaltungen oder einer beliebigen Kombination von wenigstens zwei dieser Ausgestaltungen miteinander durchgeführt werden. Die aktive Kühlung der Kühleinheit erfolgt durch eine Beaufschlagung der Kühleinheit mit einem Kühlfluidstrom.

Gemäß einer vorteilhaften Ausgestaltung wird die Kühleinheit mit einem Umgebungsluftstrom beaufschlagt. Mit dieser Ausgestaltung sind die oben mit Bezug auf die entsprechende Ausgestaltung des Geräts genannten Vorteile entsprechend verbunden.

Erfindungsgemäß wird die Kühleinheit mit einem aus einem Verdampfer der Wärmepumpe austretenden Prozessluftstrom beaufschlagt. Mit dieser Ausgestaltung sind die oben mit Bezug auf die entsprechende Ausgestaltung des Geräts genannten Vorteile entsprechend verbunden.

Gemäß einer vorteilhaften Ausgestaltung wird die Kühleinheit mit einem Umgebungsluftstrom beaufschlagt. Mit dieser Ausgestaltung sind die oben mit Bezug auf die entsprechende Ausgestaltung des Geräts genannten Vorteile entsprechend verbunden.

Nach einer weiteren vorteilhaften Ausgestaltung wird die Kühleinheit mit einer aus einem Verdampfer der Wärmepumpe austretenden Prozessluftstrom beaufschlagt. Mit dieser Ausgestaltung sind die oben mit Bezug auf die entsprechende Ausgestaltung des Geräts genannten Vorteile entsprechend verbunden.

Im Folgenden wird die Erfindung unter Bezugnahme auf die anliegenden Figuren anhand bevorzugter Ausführungsformen exemplarisch erläutert. Es zeigen:
- Fig. 1: eine schematische Darstellung eines Ausführungsbeispiels für ein erfindungsgemäßes Gerät; und
- Fig. 2: eine schematische Darstellung eines weiteren Ausführungsbeispiels für ein erfindungsgemäßes Gerät.

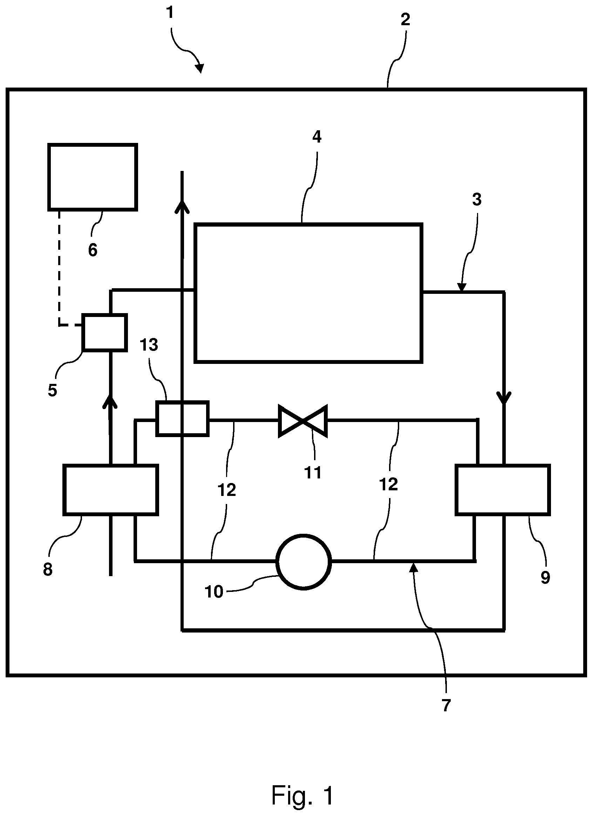

Fig. 1 zeigt eine schematische Darstellung eines Ausführungsbeispiels für ein erfindungsgemäßes Gerät 1 zum Trocknen von Wäsche.

Das Gerät 1 weist ein Gerätegehäuse 2 auf, in dem ein offenes Prozessluftsystem 3 mit einer nicht gezeigte zu trocknende Wäsche aufnehmenden Trockenkammer 4 angeordnet ist. Das Prozessluftsystem 3 weist ein Prozessluftgebläse 5 auf, das mittels einer Ansteuerelektronik 6 des Geräts 1 zur Durchführung eines Trocknungsvorgangs aktiviert werden kann.

Des Weiteren weist das Gerät 1 eine thermisch an das Prozessluftsystem 3 gekoppelte Wärmepumpe 7 auf, die als Kompressor-Wärmepumpe ausgebildet ist. Die Wärmepumpe 7 weist einen die in das Prozessluftsystem 3 eintretende Umgebungsluft erwärmenden Verflüssiger 8, einen die aus der Trockenkammer 4 austretende Prozessluft kühlenden und entfeuchtenden Verdampfer 9, einen Kompressor 10, eine Expansionseinheit 11 und diese Komponenten der Wärmepumpe 7 miteinander verbindende Kältemittelleitungen 12 auf, wodurch ein Kältemittelkreislauf der Wärmepumpe 7 ausgebildet wird.

Ferner weist das Gerät 1 eine thermisch an eine Kältemittelleitung 12 zwischen dem Verflüssiger 8 und der Expansionseinheit 11 der Wärmepumpe 7 gekoppelte Kühleinheit 13 zum Kühlen eines durch diese Kältemittelleitung 12 strömenden Kältemittels auf. Die Kühleinheit 13 ist derart an dem Prozessluftsystem 3 angeordnet, dass sie zumindest teilweise mit einer aus dem Verdampfer 9 austretenden Prozessluft beaufschlagbar ist.

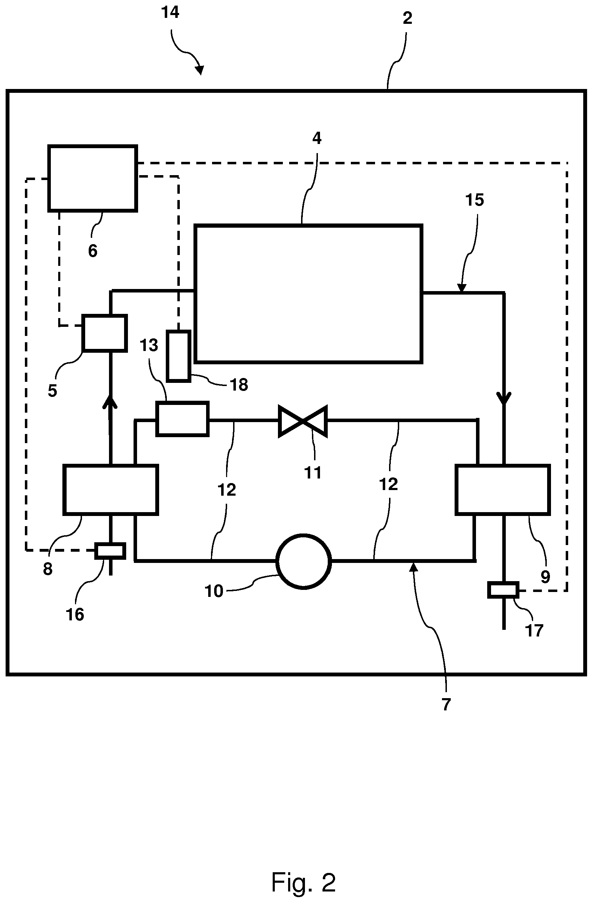

Fig. 2 zeigt eine schematische Darstellung eines Ausführungsbeispiels für ein nicht erfindungsgemäßes Gerät 14 zum Trocknen von Wäsche.

Das Gerät 14 weist ein Gerätegehäuse 2 auf, in dem ein offenes Prozessluftsystem 15 mit einer nicht gezeigte zu trocknende Wäsche aufnehmenden Trockenkammer 4 angeordnet ist. Das Prozessluftsystem 15 weist ein Prozessluftgebläse 5 auf, das mittels einer Ansteuerelektronik 6 des Geräts 14 zur Durchführung eines Trocknungsvorgangs aktiviert werden kann. An dem Prozessluftsystem 15 sind zwei Sensoren 16 und 17 zum Erfassen von jeweils wenigstens einem Prozessparameter des Trocknungsvorgangs. Die Sensoren sind mit der Ansteuerelektronik 6 verbunden.

Des Weiteren weist das Gerät 14 eine thermisch an das Prozessluftsystem 15 gekoppelte Wärmepumpe 7 auf, die als Kompressor-Wärmepumpe ausgebildet ist. Die Wärmepumpe 7 weist einen die in das Prozessluftsystem 15 eintretende Umgebungsluft erwärmenden Verflüssiger 8, einen die aus der Trockenkammer 4 austretende Prozessluft kühlenden und entfeuchtenden Verdampfer 9, einen Kompressor 10, eine Expansionseinheit 11 und diese Komponenten der Wärmepumpe 7 miteinander verbindende Kältemittelleitungen 12 auf, wodurch ein Kältemittelkreislauf der Wärmepumpe 7 ausgebildet wird.

Zudem weist das Gerät 14 eine thermisch an eine Kältemittelleitung 12 zwischen dem Verflüssiger 8 und der Expansionseinheit 11 der Wärmepumpe 7 gekoppelte Kühleinheit 13 zum Kühlen eines durch diese Kältemittelleitung 12 strömenden Kältemittels auf. Das Gerät 14 weist ein Zusatzgebläse 18 auf, das derart angeordnet ist, dass mit ihm die Kühleinheit 13 mit einem Umgebungsluftstrom beaufschlagbar ist. Das Zusatzgebläse 18 ist elektrisch mit der Ansteuerelektronik 6 verbunden, die eingerichtet ist, das Zusatzgebläse 18 in Abhängigkeit von wenigstens einem der mittels der Sensoren 16 und 17 erfassten Prozessparameter des Trocknungsvorgangs anzusteuern.

### Bezugszeichenliste:

- 1: Gerät
- 2: Gerätegehäuse
- 3: Prozessluftsystem
- 4: Trockenkammer
- 5: Prozessluftgebläse
- 6: Ansteuerelektronik
- 7: Wärmepumpe
- 8: Verflüssiger
- 9: Verdampfer
- 10: Kompressor
- 11: Expansionseinheit
- 12: Kältemittelleitung
- 13: Kühleinheit
- 14: Gerät
- 15: Prozessluftsystem
- 16: Sensor
- 17: Sensor
- 18: Zusatzgebläse

## Patentansprüche

1. Gerät (1, 14) zum Trocknen von Wäsche, aufweisend wenigstens ein offenes Prozessluftsystem (3, 15) mit wenigstens einer zu trocknende Wäsche aufnehmenden Trockenkammer (4) und wenigstens eine thermisch an das Prozessluftsystem (3, 15) gekoppelte Wärmepumpe (7), wobei wenigstens eine Kühleinheit (13) thermisch an eine Kältemittelleitung (12) zwischen einem Verflüssiger (8) und einer Expansionseinheit (11) der Wärmepumpe (7) gekoppelt ist und der Kühlung eines durch die Kältemittelleitung (12) strömenden Kältemittels dient, **dadurch gekennzeichnet, dass** die Kühleinheit (13) derart an dem Prozessluftsystem (3) angeordnet ist, dass sie zumindest teilweise mit einer aus dem Verdampfer (9) austretenden Prozessluft beaufschlagbar ist.

2. Verfahren zum Betreiben einer Wärmepumpe (7) eines Geräts (1, 14) zum Trocknen von Wäsche, das wenigstens ein offenes Prozessluftsystem (3, 15) mit wenigstens einer zu trocknende Wäsche aufnehmenden Trockenkammer (4) aufweist, wobei die Wärmepumpe (7) thermisch an das Prozessluftsystem (3, 15) gekoppelt ist, wobei ein aus einem Verflüssiger (8) der Wärmepumpe (7) ausströmendes Kältemittel mittels wenigstens einer Kühleinheit (13), die thermisch an eine das aus dem Verflüssiger (8) ausströmende Kältemittel führende Kältemittelleitung (12) gekoppelt ist, aktiv gekühlt wird, **dadurch gekennzeichnet, dass** die Kühleinheit (13) zumindest teilweise mit einem aus einem Verdampfer (9) der Wärmepumpe (7) austretenden Prozessluftstrom beaufschlagt wird.

## Claims

1. Appliance (1, 14) for drying laundry, having at least one open process air system (3, 15) with at least one drying chamber (4) accommodating laundry to be dried and at least one heat pump (7) thermally coupled to the process air system (3, 15), wherein at least one cooling unit (13) is thermally coupled to a coolant line (12) between a condenser (8) and an expansion unit (11) of the heat pump (7) and serves to cool a coolant flowing through the coolant line (12), **characterised in that** the cooling unit (13) is arranged on the process air system (3) in such a way that a process air emerging from the evaporator (9) can be at least partially applied to said cooling unit (13).

2. Method for operating a heat pump (7) of an appliance (1, 14) for drying laundry, which has at least one open process air system (3, 15) with at least one drying chamber (4) accommodating laundry to be dried, wherein the heat pump (7) is thermally coupled to the process air system (3, 15), wherein a coolant emerging from a condenser (8) of the heat pump (7) is actively cooled by means of at least one cooling unit (13), which is thermally coupled to a coolant line (12) guiding the coolant emerging from the condenser (8), **characterised in that** a process air flow emerging from an evaporator (9) of the heat pump (7) is at least partially applied to the cooling unit (13).

## Revendications

1. Appareil (1, 14) destiné à sécher du linge, comprenant au moins un système ouvert d'air de processus (3, 15) comprenant au moins une chambre de séchage (4) logeant le linge à sécher, et au moins une pompe de chaleur (7) thermiquement couplée au système d'air de processus (3, 15), dans lequel appareil au moins une unité de refroidissement (13) est thermiquement couplée à une conduite de fluide réfrigérant (12) entre un condenseur (8) et une unité d'expansion (11) de la pompe de chaleur (7), et sert au refroidissement d'un fluide réfrigérant circulant à travers la conduite de fluide réfrigérant (12), **caractérisé en ce que** l'unité de refroidissement (13) est disposée sur le système d'air de processus (3) de manière à ce qu'elle puisse être alimentée au moins en partie avec un air de processus provenant du condenseur (9).

2. Procédé de fonctionnement d'une pompe de chaleur (7) d'un appareil (1, 14) destiné à sécher du linge, lequel comprend au moins un système ouvert d'air de processus (3, 15) comprenant au moins une chambre de séchage (4) logeant le linge à sécher, dans lequel la pompe de chaleur (7) est thermiquement couplée au système d'air de processus (3, 15), dans lequel un fluide réfrigérant provenant d'un condenseur (8) de la pompe de chaleur (7) est activement refroidi au moyen d'au moins une unité de refroidissement (13) qui est thermiquement couplée à une conduite de fluide réfrigérant (12) conduisant le fluide réfrigérant provenant du condenseur (8), **caractérisé en ce que** l'unité de refroidissement (13) est alimentée au moins en partie avec un courant d'air de processus sortant d'un condenseur (9) de la pompe de chaleur (7).
